# EUROPÄISCHE PATENTSCHRIFT

(11) **EP 3 642 141 B1**
(45) Veröffentlichungstag und Bekanntmachung des Hinweises auf die Patenterteilung: **29.01.2025**
(21) Anmeldenummer: 18753046.4
(22) Anmeldetag: 18.06.2018
(51) Int. Cl.: B65G 49/06, B65G 67/04

(54) **VORRICHTUNG UND VERFAHREN ZUM SICHEREN UND SCHNELLEN TRANSFER NEUER GLASPLATTEN VON DER FERTIGUNGSLINIE ZU EINEM TRANSPORTFAHRZEUG**
DEVICE AND METHOD FOR SAFELY AND QUICKLY TRANSFERRING NEW GLASS SHEETS FROM THE PRODUCTION LINE TO A TRANSPORT VEHICLE
DISPOSITIF ET PROCÉDÉ POUR LE TRANSFERT FIABLE ET RAPIDE DE PLAQUES DE VERRE NEUVES DE LA CHAÎNE DE PRODUCTION À UN VÉHICULE DE TRANSPORT

(30) Priorität: 20.06.2017 DE 102017005809
(43) Veröffentlichungstag der Anmeldung: 29.04.2020
(73) Patentinhaber: Grenzebach Maschinenbau GmbH, 86663 Asbach-Bäumenheim (DE)
(72) Erfinder: LANG, Edwin, 86641 Rain (DE); HERFERT, Christian, 86462 Langweid (DE)
(74) Vertreter: Page, White & Farrer Germany LLP
(86) Internationale Anmeldenummer: PCT/DE2018/000192
(87) Internationale Veröffentlichungsnummer: WO 2018/233741

(56) Entgegenhaltungen:
- EP-A1- 0 048 334
- DE-A1- 2 602 622
- DE-U1- 202017 003 239
- US-A- 5 620 293
- US-A1- 2013 202 393
- US-A1- 2015 151 927

## Beschreibung

Die Erfindung betrifft eine Vorrichtung und ein Verfahren zum sicheren und schnelten Transfer neuer Glasplatten von der Fertigungslinie zu einem Transportfahrzeug

Die Herstellung großflächiger Glasplatten erfolgt in der Form von Floatglas durch das fortlaufende Ausgießen einer Glasschmelze auf einem in einer länglichen Wanne erhitzten Zinnbad und das sich hieraus ergebende Glasband. Dieses Glasband weist eine Seite auf, die auf dem Zinnbad lag, die so genannte Badseite. Die andere Seite des Glasbandes die an der Luft abgekühlt wurde, wird als die so genannte Luftseite bezeichnet. Die Badseite und die Luftseite weisen unterschiedliche Eigenschaften auf. Da zum Beispiel die Luftseite weniger Unebenheiten aufweist eignet sie sich besser für Beschichtungen. Das anschließende Konfektionieren des Floatglases geschieht durch Längsschneiden und Querschneiden des aus der Floatglasfertigung mit einer bestimmten Vorschubgeschwindigkeit auslaufenden Glasbandes. Das Längsschneiden bewirken hierbei in entsprechender Position über dem Glasband stationär installierte Längsschneidräder und das Querschneiden erfolgt mit Hilfe von Schneidbrücken und daran quer über das Glasband bewegten Querschneidrädern. Als so genanntes Bandmaß oder Großformat wird hierbei eine Größe von 6 Meter mal 3,21 Meter bezeichnet. Als so genanntes geteiltes Bandmaß oder Mittelformat wird eine Plattengröße von 3,21 Meter mal 2 Meter (bis 2,5 Meter) bezeichnet.

Um Glasplatten von solcher Größe bruchfrei von einem Ort zu einem anderen zu transportieren werden Haltemechanismen, meist in der Form eines in sich stabilen Rahmens, an die betreffende Glasplatte heranbewegt und mit diesem über Saugnäpfe verbunden. Dann wird der Haltemechanismus mit der daran angesaugten Glasplatte weiterbefördert.

Zum Stand der Technik ist aus der Druckschrift DE 20 2010 017 750 U1 eine Vorrichtung zum Übergeben von Plattenmaterial in einer Fertigungsanlage und eine diesbezügliche Fertigungsanlage mit Plattenmaterial bekannt.

Hierbei ist die Zielsetzung dieser Vorrichtung die Bereitstellung einer gegenüber dem genannten Stand der Technik verbesserten Vorrichtung zum Übergeben von Plattenmaterial in einer Fertigungsanlage, die einige der vorher genannten Nachteile behebt.

Aus der Druckschrift DE 26 02 622 A1 ist eine weitere herkömmliche Vorrichtung zum Transport von Glasplatten bekannt, wobei die durch Sauger gehaltenen Glasplatten um 3 verschiedene Achsen gedreht oder gekippt werden und entlang von Schienen befördert werden können.

Die Druckschrift US 2013/202393 A1 offenbart eine weitere herkömmliche Vorrichtung zum Transport von Glasplatten sowie ein zugehöriges Verfahren, wobei Glasplatten, die über einen Rollenförderer angeliefert werden, von einer auf Schienen bewegbaren Glasgestell-Lafette in eine vertikale Position geschwenkt und seitlich in Stapelregale verschoben werden können.

Weiterhin zeigt die Druckschrift EP 0 048 334 A1 eine Vorrichtung und ein Verfahren zum Sortieren von unsortierten Glasscheiben, wobei mittels einer Übergabevorrichtung unsortierte Glasscheiben aus einem auf Schienen bewegbaren Fächerwagen in sortierter Reihenfolge in Fächern eines unbeweglichen Fächergestells ablegt werden.

Schließlich ist aus der Druckschrift US 2015/0151927 A1 eine Vorrichtung und ein Verfahren zum Stapeln von Glasscheiben bekannt, wobei ein Glasgestell mit schräg gestellten Glasplatten beladen werden kann.

Aus der den Oberbegriff des Patentanspruchs 1 bildenden Druckschrift US 5 620 293 A ist eine Vorrichtung und ein Verfahren zum sicheren und schnellen Transfer neuer Glasplatten von der Fertigungslinie zu einem Transportfahrzeug bekannt, welche einen Glasplatten-Rollenförderer mit einer Glasgestell-Greif- und Stapeleinrichtung zur Aufnahme von Glasplatten von einer Fertigungslinie aufweist. Eine Glasgestell-Lafette mit mindestens einem aufliegenden Glasgestell bewegt sich auf Fahrschienen, wobei das Glasgestell mit schräg gestellten Glasplatten beladen werden kann. Ferner ist im Zuge der Fahrschienen eine Drehvorrichtung zur Drehung der Glasgestell-Lafette um 180 Grad angeordnet.

Der Erfindung liegt die Aufgabe zugrunde, eine Vorrichtung und ein Verfahren zum sicheren und schnellen Transfer neuer Glasplatten von der Fertigungslinie zu einem Transportfahrzeug anzugeben, wobei die Beförderung schnell und beschädigungsfrei erfolgen soll.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 5 gelöst.

In den Unteransprüchen sind weitere vorteilhafte Ausgestaltungen der Erfindung gekennzeichnet.

Die Erfindung wird im Folgenden näher beschrieben.

Es zeigen im Einzelnen:
Fig.1: eine Übersicht über den Transfervorgang,
Fig.2: einen Querschnitt des Transfervorgangs,
Fiq.3: einen Querschnitt der Stabilisierungseinrichtung 10,
Fiq.4: eine Draufsicht auf die Drehvorrichtung 2,
Fig.5: eine Rangiereinrichtung zur Eliminierung defekter Glasgestell-Lafetten,
Fig.6: eine Übersicht über die während der Transferprozesse ermittelten Betriebsdaten der gesamten Anlage und
Fig.6a: die Fortsetzung der Übersicht von Fig.6.

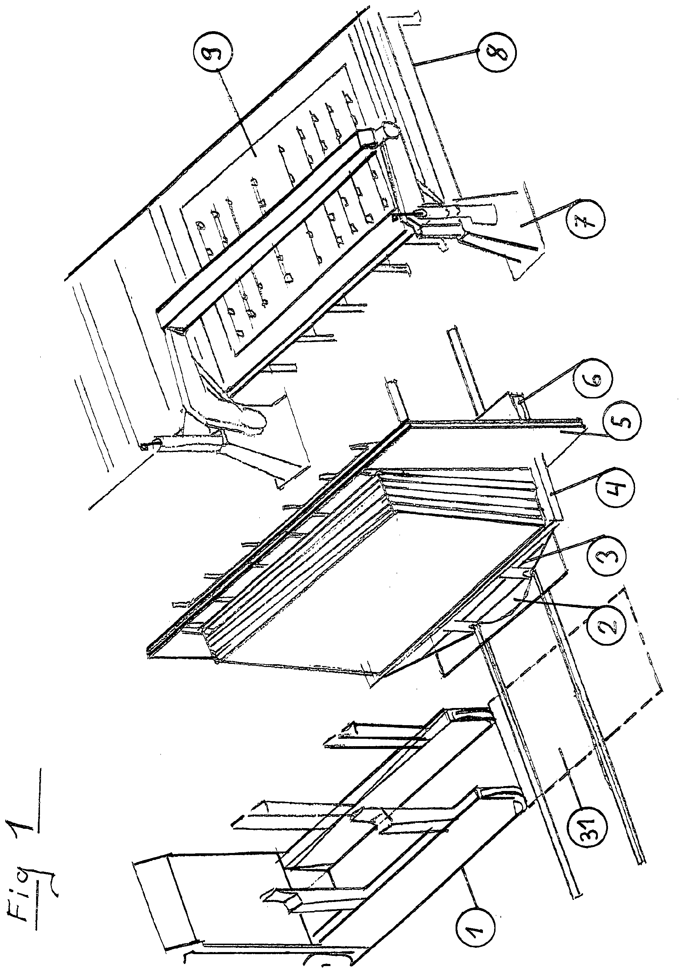

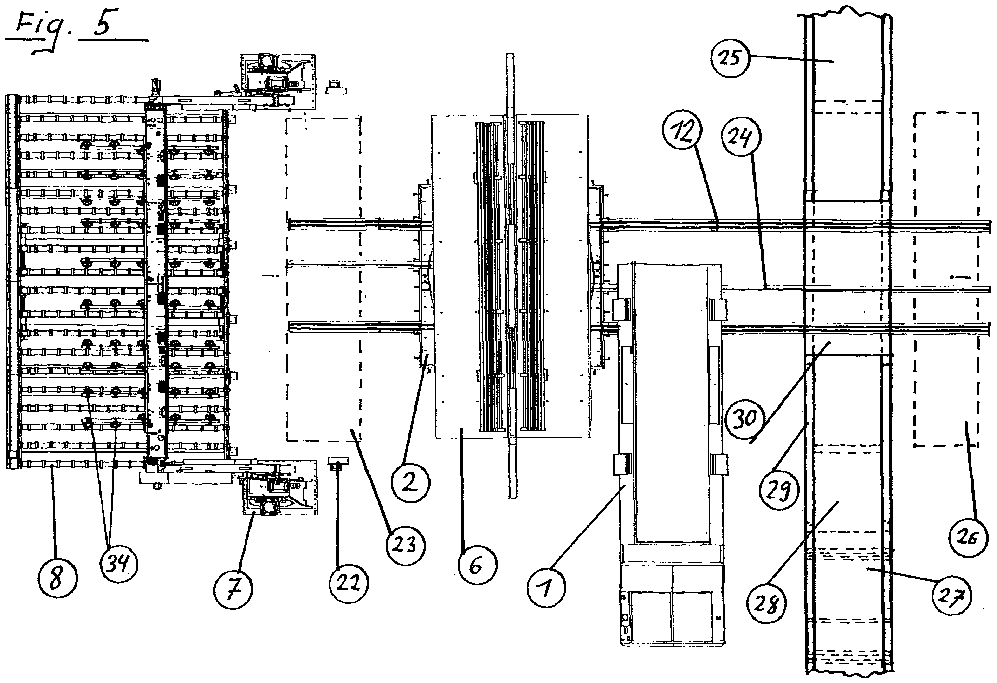

Die Fig.1: zeigt eine Übersicht über den Transfervorgang eines Stapels Glasplatten 9. Rechts ist zu sehen wie eine Greif- und Stapeleinrichtung 7 eine auf einem Glasplatten-Rollenförderer 8 angelieferte Glasplatte 9 auf eine Glasgestell-Lafette 3 setzt. Die Einrichtung 7 benutzt dazu Greifer 34, wie sie in der Fig.5 gezeigt sind. Die Glasgestell - Lafette 3 ist mit einer Drehvorrichtung 2 verbunden die es ermöglicht die Glasgestell - Lafette 3 in eine Position zu drehen die für die Beladung eines jeweils vorhandenen, zu beladenden, Transportfahrzeugs 1 geeignet ist. Die Drehvorrichtung 2 ermöglicht eine leere Glasgestell - Lafette 3 an die Glasgestell - Greif - und Stapeleinrichtung 7 zum Befüllen heran zu bewegen und sodann im beladenen Zustand zu drehen und die andere Seite zu befüllen.

Das Transportfahrzeug 1 ist im hinteren Teil an der Unterseite offen, sodass es über eine beladene Lafette 3 fahren kann. In dem Glastransportfahrzeug 1 befindet sich eine Hebeeinrichtung 11 die das auf einer Glasgestell - Lafette 3 aufliegende Glasgestell 4 anheben kann, sodass das Glasgestell 4 in dem Transportfahrzeug 1 bleiben kann und die leere Glasgestell - Lafette 3 aus dem Glastransportfahrzeug 1 herausfahren kann, bzw. das Glastransportfahrzeug 1 sich von selbst fortbewegen kann. Dieser Sachverhalt ist in der Fig,2 zu sehen. Die entsprechende Fläche zur Beladung eines Glastransportfahrzeugs 1 ist in der Fig.1 mit 31 bezeichnet.

Die Drehvorrichtung 5 weist eine Mittelwand 5 auf, auf deren linken Seite in der Fig.1 ein befülltes Glasgestell dargestellt ist und deren rechte Seite ein Glasgestell im Beladungszustand zeigt. Ein Glasgestell 4 ist ein verwindungssteifes Gestell aus Stahlrohr

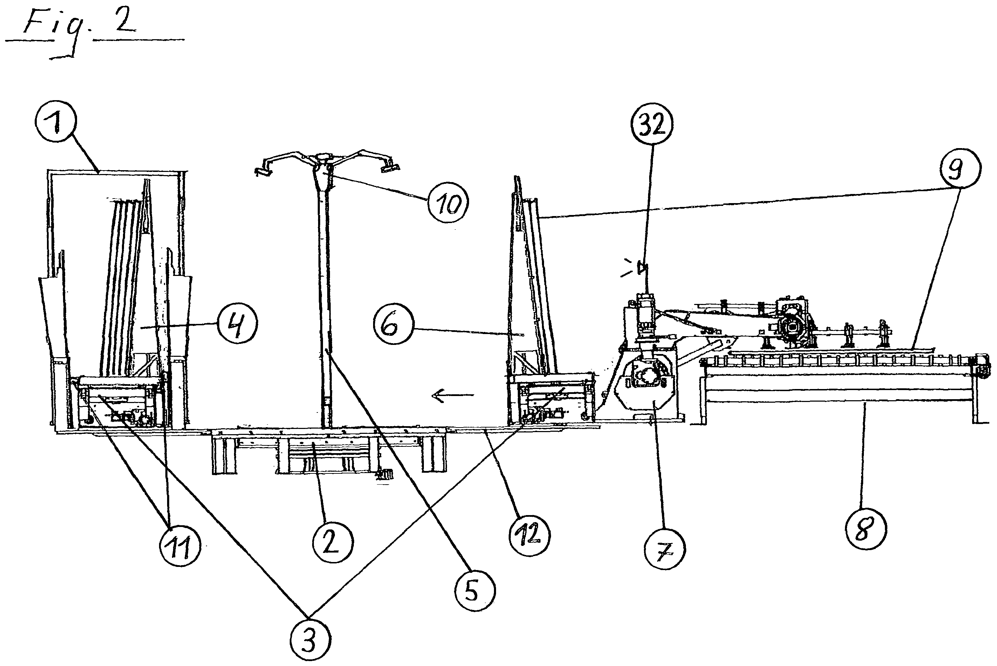

Die Fig.2: zeigt einen Querschnitt des Transfervorgangs in detaillierter Form.

Hier ist auf der linken Seite in dem Glastransportfahrzeug 1 eine Glasgestell - Lafette 3 mit einem befüllten Glasgestell 4 in Verbindung mit einer Hebeeinrichtung 11 zum Abtransport zu sehen und auf der der linken Seite der Glasgestell - Greif - und Stapeleinrichtung 7 ist eine weitere Glasgestell - Lafette 3 mit zwei Glasplatten 9 eines Glasgestells 6 im Beladungszustand dargestellt, wobei auf dem Glasplatten - Rollenförderer 8 eine weitere Glasplatte 9 aufliegt. Die Hebeeinrichtung 11 dient dazu ein Glasgestell 4 auf die Beladungshöhe des Glastransportfahrzeugs 1 zu heben, wie bei der Fig.1 beschrieben.

Die Glasgestell - Lafetten 3 werden auf den gezeigten Fahrschienen 12 von dem Glasplatten - Rollenförderer 8 bis zum Glastransportfahrzeug 1 befördert.

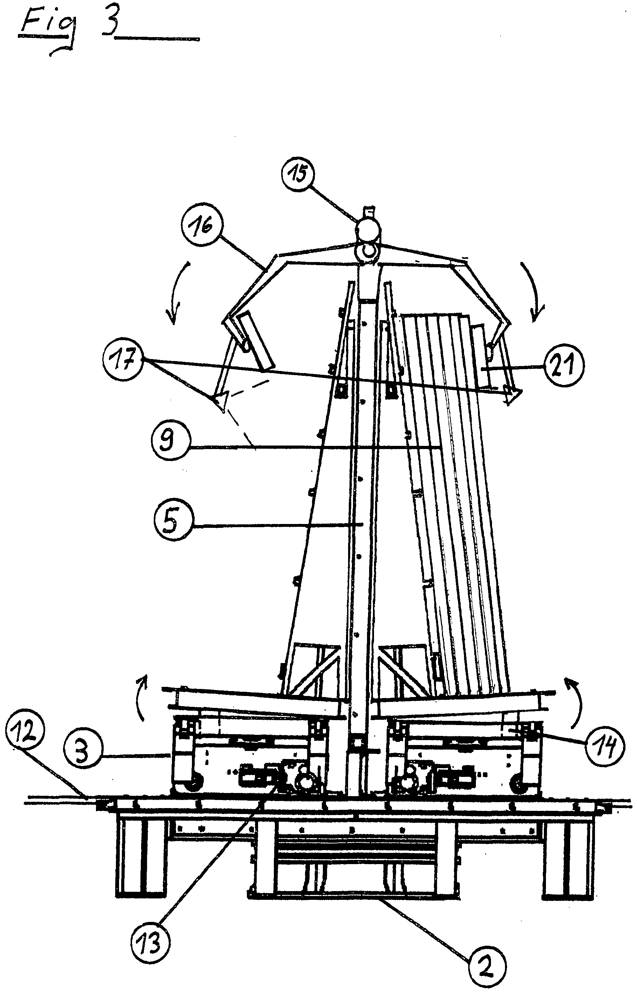

Die im Querschnitt gezeigte Drehvorrichtung 2 mit ihrer Mittelwand 5 weist an der Oberseite der Mittelwand 5 eine beidseitig einsetzbare Stabilisierungseinrichtung 10 auf die, wie in der Fig.3 gezeigt, jeweils einen Stapel Glasplatten abstützen kann um bei einer Drehung der Drehvorrichtung 2 ein Umkippen und ein Verschieben eines Stapels Glasplatten zu verhindern. Auf diese Weise kann die Drehzahl der Drehvorrichtung 2 sicher erhöht werden. Im Bereich der Glasgestell - Greif - und Stapeleinrichtung 7 sind in dieser Seitenansicht einer von mehreren Glasbruchdetektoren 32 zu sehen. Hier wird sofort nach dem Umladen von dem Glasplatten - Rollenförderer 8 ermittelt, ob die jeweilige Glasplatte einwandfrei ist.

Die Fig.3: zeigt einen Querschnitt der Stabilisierungseinrichtung 10 Oberhalb der Drehvorrichtung 2 ist der Antrieb 13 einer auf den Fahrschienen 12 bewegten Glasgestell - Lafette 3 gezeigt. Auf der rechten Seite ist zur Neigung eines aufgeladenen Stapels Glasplatten 9 und der Fixierung und dem Kippen in Richtung Mittelwand 5 der Drehvorrichtung 2 der Lage eines Glasgestells eine Schwenkeinrichtung 14 zu sehen. Dies ermöglicht ebenfalls wie die Stabilisierungseinrichtung 10 ein gefahrloses schnelles Drehen der Drehvorrichtung 2 Die Stabilisierungseinrichtung 10 weist einen Antrieb 15 auf der die beidseitigen Arme 16 auf der Mittelwand 5 nach unten bewegen kann.

Zur Detektion eines Glasgestells dient eine 3D - Stabilisierungseinrichtung 17. Diese Einrichtung 17 ermittelt mittels eines Vergleichs mit einem einwandfreien Glasgestell mittels eines Algorithmus der Mustererkennung ob das jeweilige vorliegende Glasgestell beschädigt oder in der Struktur verzogen ist.

Auf der rechten Seite ist einer beiden Stabilisator - Druckteller mit 21 bezeichnet die ebenfalls der Stabilisierung von Glasplatten 9 dienen,

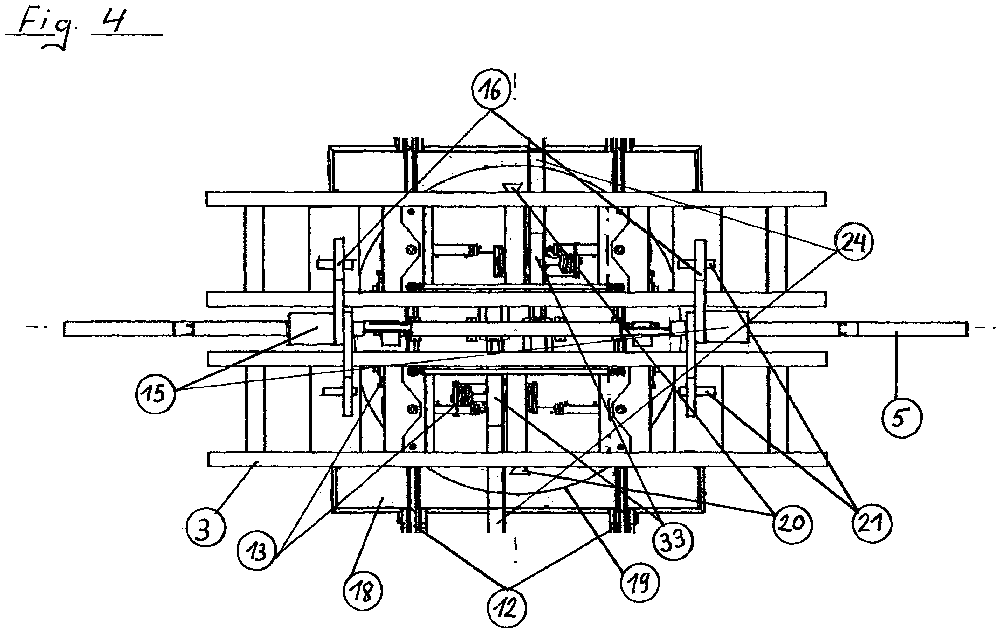

Die Fig.4 zeigt eine Draufsicht auf die Drehvorrichtung 2 mit zwei Lafetten ohne ein Glasgestell und ohne Glasplatten.

Der in der Mitte dargestellte Kreis kennzeichnet den Drehteller 19 der Drehvorrichtung 2. Die längste Ausdehnung im Durchmesser der gezeigten Drehvorrichtung 2 weist die von oben gezeigte Mittelwand 5 der Drehvorrichtung 2 auf, wobei hier auf der linken Seite der Mittelwand 5 ein Antrieb 15 für die Stabilisierungseinrichtung bezeichnet ist und der entsprechende Antrieb auf der rechten Seite nicht bezeichnet ist. An beiden Antrieben der jeweiligen Stabilisierungseinrichtung ist von oben auf den beiden Seiten der jeweiligen Stabilisierungseinrichtung auf der oberen Seite der Mittelwand 5 ein Arm 16 der Stabilisierungseinrichtung zu erkennen, wobei auf der rechten Seite jeweils ein Druckteller 21 bezeichnet ist.

Zu beiden Seiten der Mittelwand 5 sind jeweils von oben die Seitenwände einer Glasgestell - Lafette 3 zu sehen, wobei auf der linken Seite der Fig,4 Teile des Antriebs 13 der betreffenden Glasgestell - Lafette bezeichnet sind.

Mit dem gleichen Mittelpunkt wie der Drehteller 19 ist der quadratische Umriss des Grundkörpers 18 der Drehvorrichtung 2 zu erkennen.

Quer zur Mittelwand 5 erstrecken sich die Fahrschienen 12 auf denen sich die jeweilige Glasgestell - Lafette bewegt.

Im Bereich der Drehvorrichtung 2 sind im oberen und im unteren Bildteil Teile der Unterflur - Energieversorgungs - Schiene 24 zu erkennen die auch in der Fig.5 beschrieben wird. Die in diesem Bereich gezeigten Stromabmehmer 33 dienen ebenfalls der Energieversorgung,
Zur Ermittlung des Standorts einer Glasgestell - Lafette dienen die beiden, auf beiden Seiten in Richtung der Fahrschienen 12 gerichteten Wegstrecken - Detektions - Sensoren 20 für die Ermittlung der Wegstrecke einer Lafette.

Die Fig.5 zeigt eine Rangiereinrichtung zur Eliminierung defekter Glasgestell - Lafetten.

Von der auf der linken Seite der Übersicht in der Fig.5 führen Fahrschienen 12 von dem Glaspatten - Rollenförderer 8 mit seiner Glasgestell - Greif - und Stapeleinrichtung 7 und ihren Greifern 34 über einen Beladpatz 23 unter einem Glasgestell 6 im Beladungszustand auf der Drehvorrichtung 2 hindurch in den Bereich eines Glastransportfahrzeugs 1 bis zu einem Reserveplatz 26 für eine eventuelle Verschiebung.

An dem Beladeplatz 23 sind Detektionsvorrichtungen 22 angebracht und zwischen den Fahrschienen 12 läuft eine Energieversorgungs - Schiene 24.

Auf der rechten Seite der Fig.5 sind ein Verschiebeplatz 25 mit der Nr1 und ein Verschieblatz 28 mit der Nr.2 mit Verschiebschlitten 30 und 27 auf einer Verschiebebahn 29 dargestellt. Ein Reserveplatz 26 für eine weitere Verschiebung steht als Alternative zur Verfügung.

Eventuell zusätzlich benötigte Glasgestell - Lafetten 3 können mittels eines, nicht gezeigten, Krans oder eines Staplers an jede Stelle der Transfer - Anlage verbracht werden.

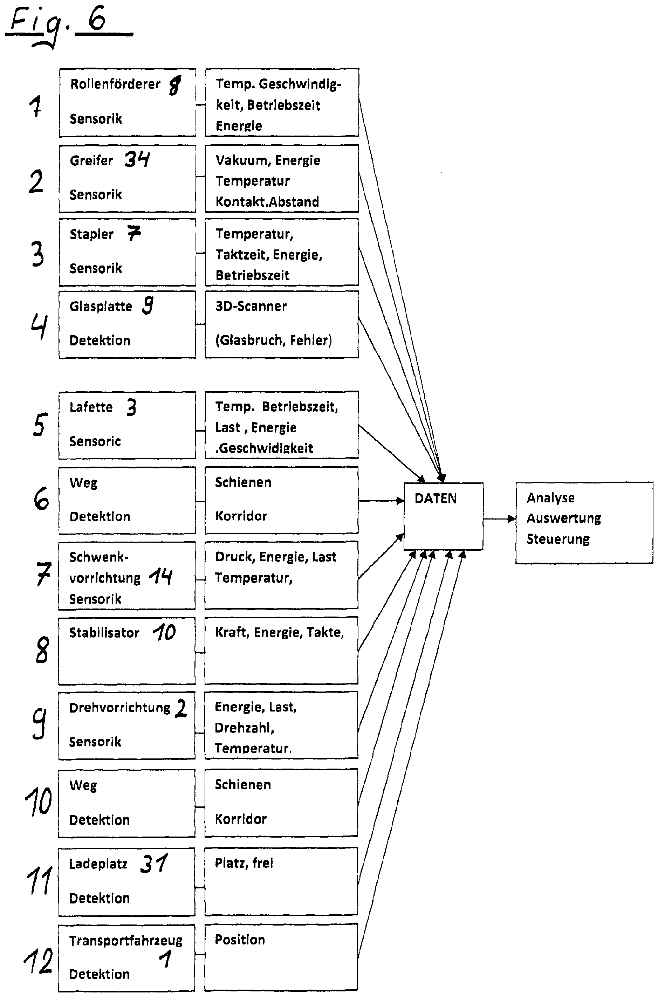

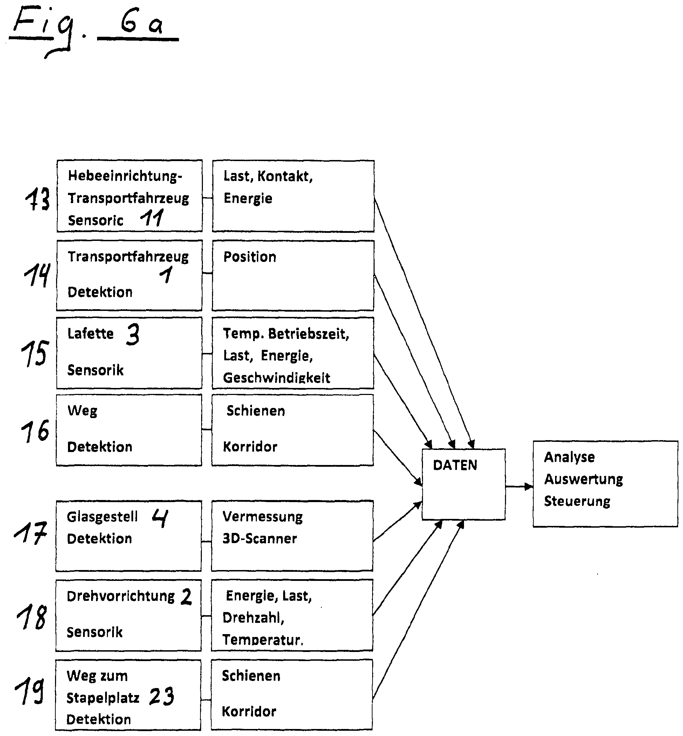

Die Fig.6 zeigt eine Übersicht über die während der Transferprozesse ermittelten Betriebsdaten der gesamten Anlage.

Hier sind zwölf von insgesamt 19 Schritten aufgezeigt, von denen jeweils Daten ermittelt werden die zu Kennzahlen führen die für die Analyse durch die Auswertung dieser Daten und zur Steuerung der Anlage dienen.

Der 1.Schritt betrifft den Glasplatten - Rollenförderer 8 und seine Sensorik. Die hier ermittelten Daten betreffen die Temperatur der Glasplatten, die Geschwindigkeit der einlaufenden Glasplatten , die Betriebszeit und den Energieverbrauch beim Betrieb des Rollenförderers 8.

Der 2.Schritt betrifft die Greifer 34 mit denen eine Glasplatte erfasst wird und ihre Sensorik. Die jeweiligen Daten betreffen das zur Verfügung stehende Vakuum der betreffenden Greifer 34 und deren Energieaufwand bei der Erschaffung des Vakuums. Weiter wird die jeweils herrschende Temperatur gemessen. Zudem wird der Abstand der Greifer 34 von der Glasplatte ermittelt und die Kraft die auf die Glasplatte wirkt.

Im 3.Schritt wird die Sensorik der Glasgestell - Greif - und Stapeleinrichtung 7 vermessen. Auch hier ist die Betriebstemperatur wichtig und die beim Betrieb erzielte Taktzeit. Zudem wird der Energieverbrauch gemessen.

Der 4.Schritt betrifft die Detektion der jeweils geförderten Glasplatte 9. Hauptsächlich werden hier die Betriebsdaten der 3D - Scaneinrichtung 17 berücksichtigt die einen Glasbruch und /oder Fehler in der Struktur einer Glasplatte betreffen.

Diese 4 Betriebsschritte betreffen den Vorgang der Aufnahme einer Glasplatte und die ermittelten Daten fallen bei jeder aufgenommenen Glasplatte an.

Im 5.Schritt wird die Sensorik einer Lafette 3 untersucht. Die ermittelten Daten betreffen hierbei neben der Betriebszeit und der Betriebstemperatur die Ermittlung der aufliegenden Last. Weiter wird die Geschwindigkeit einer Lafette 3 gemessen und der im Betrieb benötigte Energieverbrauch.

Der 6. Schritt betrifft die Detektion und die Vermessung der jeweils zurückgelegten Wegstrecke einer Glasgestell - Lafette 3. Gemessen wird hierbei die Belegung der Fahrschienen 12 und der freie Korridor für eine geplante Fahrstrecke.

Im 7.Schritt wird die Sensorik der Schwenkvorrichtung 14 bei dem Betrieb einer Glasgestell - Lafette 3 vermessen. Es wird der Druck des aufliegenden Glasgestells und seine Last ermittelt sowie der Energieverbrauch der Schwenkvorrichtung 14 bei der Verschwenkung eines Glasgestells zur Mittelwand 5 der Drehvorrichtung 2. Weiter wird die Betriebstemperatur und die Taktrate des Schwenkvorgangs ermittelt. Der 8. Schritt betrifft den Stabilisator 10.

Hier wird die Kraft ermittelt mit der jeweils ein Arm 16 einen Stapel Glasplatten fixiert Weiter ist die im Betrieb erzielte Taktrate und der Energieverbrauch als Kennwert wichtig.

Der 9.Schritt betrifft die Sensorik der Drehvorrichtung 2. Es wird die aufliegende Last und der Energieverbrauch während des Drehvorgangs ermittelt. Weiter wird die jeweils erzielte Drehzahl und die Betriebstemperatur gemessen.

Der 10 Schritt betrifft die Detektion und die Vermessung der jeweils zurückgelegten Wegstrecke einer Glasgestell - Lafette 3, Gemessen wird hierbei die Belegung der Fahrschienen 12 und der freie Korridor für eine geplante Fahrstrecke.

Der 11.Schritt betrifft die Detektion des Ladebereichs 31 für das Transportfahrzeug 1. Hier wird ermittelt ob der Platz 31 frei oder belegt ist.

Im 12.Schritt wird das Transportfahrzeug 1 detektiert. Es wird die Position des jeweiligen Fahrzeugs 1 ermittelt.

Fig.6a zeigt die Fortsetzung der Übersicht von Fig.6.

Im Schritt 13 wird die Sensorik der Hebeeinrichtung 11 im Glastransportfahrzeug 1 behandelt. Es wird die Last ermittelt die das jeweilige Glasgestell darstellt und der Energieaufwand gemessen den die Hebeeinrichtung 11 zum Anheben des Glasgestells. Zudem wird der Kontakt des Glasgestells mit dem jeweiligen Fahrzeug 1 registriert.

Im 14. Schritt wird das Transportfahrzeug 1 detektiert. Es wird die Position des jeweiligen Fahrzeugs 1 ermittelt.

Im 15. Schritt wird die Sensorik einer Lafette 3 untersucht. Die ermittelten Daten betreffen hierbei neben der Betriebszeit und der Betriebstemperatur die Ermittlung der aufliegenden Last. Weiter wird die Geschwindigkeit einer Lafette 3 gemessen und der im Betrieb benötigte Energieverbrauch.

Der 16. Schritt betrifft die Detektion und die Vermessung der jeweils zurückgelegten Wegstrecke einer Glasgestell - Lafette 3, Gemessen wird hierbei die Belegung der Fahrschienen 12 und der freie Korridor für eine geplante Fahrstrecke.

Der 17.Schritt betrifft die Detektion der jeweils geförderten Glasplatte 9. Hauptsächlich werden hier die Betriebsdaten der 3D - Scaneinrichtung 17 berücksichtigt die einen Glasbruch und /oder Fehler in der Struktur einer Glasplatte betreffen.

Der 18.Schritt betrifft die Sensorik der Drehvorrichtung 2. Es wird die aufliegende Last und der Energieverbrauch während des Drehvorgangs ermittelt. Weiter wird die jeweils erzielte Drehzahl und die Betriebstemperatur gemessen.

Der 19. Schritt betrifft den Weg zum Beladeplatz 23.

Gemessen wird hierbei die Belegung der Fahrschienen 12 und der freie Korridor für eine geplante Fahrstrecke.

### Bezugszeichenliste

- 1: Glastransportfahrzeug
- 2: Drehvorrichtung
- 3: Glasgestell - Lafette
- 4: Glasgestell (befüllt)
- 5: Mittelwand der Drehvorrichtung
- 6: Glasgestell (bereit zur Beladung)
- 7: Glasgestell - Greif - und Stapeleinrichtung
- 8: Glasplatten - Rollenförderer
- 9: Glasplatten
- 10: Stabilisierungseinrichtung
- 11: Hebeeinrichtung für ein Glasgestell
- 12: Fahrschienen
- 13: Antrieb für eine Glaslafette
- 14: Schwenkvorrichtung
- 15: Antrieb für die Stabilisierungseinrichtung
- 16: Arm der Stabilisierungseinrichtung
- 17: 3D - Scaneinrichtung für die Detektion eines Glasgestells
- 18: Grundkörper der Drehvorrichtung 2
- 19: Drehteller der Drehvorrichtung 2
- 20: Wegstrecken - Detektions - Sensor für die Lafettenbahn
- 21: Stabilisator - Druckteller
- 22: Detektions - Vorrichtung für den Beladevorgang
- 23: Beladeplatz
- 24: Unterflur - Energieversorgungs - Schiene
- 25: Verschiebeplatz Nr.1
- 26: Reserveplatz für eine Verschiebung
- 27: Verschiebschlitten Nr.2 für eine Lafette mit einem Glasgestell
- 28: Verschiebeplatz Nr.2
- 29: Verschiebebahn
- 30: Verschiebeschlitten Nr.1
- 31: Ladebereich des Transportfahrzeugs
- 32: Glasbruchdetektoren
- 33: Stromabnehmer
- 34: Greifer

## Patentansprüche

1. Vorrichtung zum sicheren und schnellen Transfer neuer Glasplatten von der Fertigungslinie zu einem Transportfahrzeug mit den folgenden Merkmalen:
einem Glasplatten-Rollenförderer (8) mit einer Glasgestell-Greif- und Stapeleinrichtung (7) zur Aufnahme von Glasplatten (9) von einer Fertigungslinie,
mindestens einer, auf Fahrschienen (12) sich bewegenden Glasgestell-Lafette (3) mit mindestens einem aufliegenden Glasgestell (4, 6), wobei das Glasgestell (4, 6) mit schräg gestellten Glasplatten (9) beladen werden kann, und
einer, im Zuge der Fahrschienen angeordneten Drehvorrichtung (2) zur Drehung der zumindest einen Glasgestell-Lafette (3) um 180 Grad zur Beladung von jeweils einer Glasgestell-Lafette (3),
**gekennzeichnet durch**
zwei parallel, im rechten Winkel auf den Glasplatten-Rollenförderer (8) mittig zulaufenden Fahrschienen (12), wobei im Bereich zwischen den Fahrschienen (12) eine Unterflur-Energieversorgungsschiene (24) angeordnet ist, und wobei die Glasgestelle (4, 6) mittels einer Schwenkvorrichtung (14) in der Schräglage fixiert werden können.

2. Vorrichtung nach Anspruch 1, **dadurch gekennzeichnet, dass** für die Detektion der Unversehrtheit eines Glasgestells (4, 6) eine Stabilisierungseinrichtung (10) an der Oberseite der Mittelwand (5) der Drehvorrichtung (2) vorgesehen ist, wobei an jedem Arm (16) der Stabilisierungseinrichtung (10) eine 3D-Scaneinrichtung (17) angebracht ist.

3. Vorrichtung nach einem der Ansprüche 1 oder 2, **dadurch gekennzeichnet,**
**dass** eine, quer zu den Fahrschienen (12) verlaufende Verschiebebahn (29) mit Verschiebeschlitten (30, 28) für eine Lafette (3) mit einem Glasgestell als Reserve vorgesehen ist.

4. Vorrichtung nach einem der vorhergehenden Ansprüche, **dadurch gekennzeichnet,**
**dass** am Beladeplatz (23) im Bereich des Glasplatten-Rollenförderers (8) auf beiden Seiten der betreffenden Glasgestell-Lafette (3) jeweils eine Detektions-Vorrichtung (22) für den Beladevorgang vorgesehen ist.

5. Verfahren zum sicheren und schnellen Transfer neuer Glasplatten von der Fertigungslinie zu einem Transportfahrzeug mit den folgenden Merkmalen:
eine von einer Förderlinie gelieferte Glasplatte (9) wird von einem Rollenförderer (8) geliefert und mittels einer Glasgestell-Greif- und Stapeleinrichtungen (7) auf ein, auf einer Glasgestell-Lafette (3) aufliegendes Glasgestell (4, 6) versetzt, wobei das Glasgestell (4, 6) mittels einer Schwenkvorrichtung (14) in der Schräglage fixiert wird,
nach der, für das Glasgestell (4, 6) anzahlmäßig vorgegebenen Befüllung der Glasgestell-Lafette (3) wird diese mittels ihres Antriebs (13) auf eine Drehvorrichtung (2) gefahren, mittels einer Stabilisierungseinrichtung (10) auf der Drehvorrichtung (2) fixiert und um 180 Grad zur Beladung mit einer weiteren Glasgestell-Lafette (3) gedreht,
nach der Beladung der Drehvorrichtung (2) mit zwei Glasgestell-Lafetten (3) werden diese in das jeweilige bereitstehende betreffende Glastransportfahrzeug (1) befördert, wobei die Glasgestell-Lafette (3) auf Fahrschienen (12) von dem Rollenförderer (8) bis zum Transportfahrzeug (1) befördert wird, und
eine Energieversorgung durch eine im Bereich zwischen den Fahrschienen (12) angeordnete Unterflur-Energieversorgungsschiene (24) erfolgt.

6. Verfahren nach Anspruch 5, **dadurch gekennzeichnet,**
**dass** bei Glasbruch oder eventuellen Defekten eine Verschiebung mittels einer weiteren Fahrschiene in der Form einer Verschiebebahn (29) mit Verschiebeschlitten (30, 28) durchgeführt wird.

7. Verfahren nach einem der Ansprüche 5 oder 6, **dadurch gekennzeichnet,**
**dass** ein Beladevorgang an dem Beladeplatz (23) im Bereich des Glasplatten-Rollenförderers (8) mittels einer zu beiden Seiten der Glasgestell-Lafette (3) vorgesehenen Detektions-Vorrichtung (22) erfasst wird.

## Claims

1. Device for the secure and fast transfer of new glass plates from the production line to a transport vehicle, with the following features:
a glass plate roller conveyor (8) with a glass rack gripping and stacking device (7) for receiving glass plates (9) from a production line,
at least one, on tracks (12) moving glass rack carriage (3), with at least one overlying glass rack (4, 6), wherein the glass rack (4, 6) can be loaded with inclined glass plates (9),
and a, in course of the tracks arranged rotating device (2) for rotating the at least one glass rack carriage (3) by 180 degrees for loading each glass rack carriage (3),
**characterized by**:
two parallel, at right angles on the glass plate roller conveyor (8) centered tapered tracks (12), where in the area between the tracks an underfloor power supply rail (24) is arranged,
and where the glass racks (4, 6) can be fixed by a pivoting device (14) in the inclined position.

2. Device according to claim 1, **characterized in that**:
for detecting the integrity of a glass rack (4, 6) a stabilization device (10) is provided at the top of the center wall (5) of the rotating device (2), wherein at each arm (16) of the stabilization device (10) a 3D scanning device (17) is arranged.

3. Device according to one of the claims 1 or 2, **characterized in that**:
a shifting track (29) running transversely to the tracks (12) with sliding carriages (30, 28) is provided for a carriage (3) with a glass rack as a reserve.

4. Device according to one of the preceding claims, **characterized in that**:
at the loading station (23) in the area of the glass plate roller conveyor (8) on both sides of the relevant glass rack carriage (3) each having a detection device (22) for the loading process.

5. Method for the secure and fast transfer of new glass plates from the production line to a transport vehicle, comprising the following steps:
a by a conveyor line delivered glass plate (9) is conveyed by a roller conveyor (8) and is transferred by a glass rack gripping and stacking device (7) on a, on a glass rack carriage (3) overlying glass rack (4, 6), wherein the glass rack (4, 6) by a pivoting device (14) is fixed in the inclined position,
after the for the glass rack (4, 6) predefined number filling of the glass rack carriage (3), it will be driven by its drive (13) to a rotating device (2), fixed by a stabilization device (10) on the rotating device (2), and rotated by 180 degrees for loading with another glass rack carriage (3),
after loading the rotating device (2) with two glass rack carriages (3), these are transported into the respective prepared relevant glass transport vehicle (1), wherein the glass rack carriage (3) on tracks (12) is transported from the roller conveyor (8) to the transport vehicle (1),
and a power supply through a in the area between the tracks (12) arranged underfloor power supply rail (24).

6. Method according to claim 5, **characterized in that**:
in the event of glass breakage or possible defects, a displacement via an additional track in the form of a sliding track (29) with sliding carriages (30, 28) is performed.

7. Method according to one of the claims 5 or 6, **characterized in that**:
a loading process at the loading station (23) in the area of the glass plate roller conveyor (8) is detected by a on both sides of the glass rack carriage (3) arranged detection device (22).

## Revendications

1. Dispositif destiné au transfert sûr et rapide de nouvelles plaques en verre depuis la ligne de production jusqu'à un véhicule de transport et présentant les caractéristiques suivantes :
un convoyeur à rouleaux de plaques en verre (8) doté d'un dispositif d'empilage et de préhension à structure en verre (7) et servant à recevoir des plaques en verre (9) issues d'une ligne de production ;
au moins un chariot à structure en verre (3) qui se déplace sur des rails (12) et qui dispose d'au moins une structure en verre (4, 6) sur le dessus, dans lequel la structure en verre (4, 6) peut être chargée avec des plaques en verre (9) positionnées de manière inclinée ; et
un dispositif rotatif (2) placé le long des rails et destiné à faire tourner ledit au moins un chariot à structure en verre (3) de 180 degrés dans le but de charger chaque chariot à structure en verre (3),
**caractérisé par** :
deux rails (12) parallèles, effilés au milieu et perpendiculaires au convoyeur à rouleaux de plaques en verre (8), dans lequel un rail sous plancher servant à l'alimentation en énergie (24) est disposé dans la zone entre les rails (12), et dans lequel la structure en verre (4, 6) peut être fixée dans la position inclinée au moyen d'un dispositif pivotant (14).

2. Dispositif selon la revendication 1, **caractérisé en ce que** :
pour détecter l'intégrité d'une structure en verre (4, 6), un dispositif de stabilisation (10) est prévu sur le dessus de la paroi centrale (5) du dispositif rotatif (2), dans lequel un dispositif de balayage 3D (17) est prévu à chaque bras (16) du dispositif de stabilisation (10).

3. Dispositif selon l'une des revendications 1 à 2, **caractérisé en ce que** :
une voie de triage (29) avec des chariots de triage (30, 28) et qui s'étend transversalement aux rails (12) est prévue pour un chariot (3) avec une structure en verre en tant que réserve.

4. Dispositif selon l'une des revendications précédentes, **caractérisé en ce que** :
à l'endroit dédié au chargement (23) dans la zone du convoyeur à rouleaux de plaques en verre (8), un dispositif de détection (22) pour le processus de chargement est respectivement prévu des deux côtés du chariot à structure en verre correspondant (3).

5. Procédé destiné au transfert sûr et rapide de nouvelles plaques en verre depuis la ligne de production jusqu'à un véhicule de transport et présentant les caractéristiques suivantes :
une plaque en verre (9) acheminée par une ligne de convoyage est acheminée par un convoyeur à rouleaux (8) et transférée, au moyen d'un dispositif d'empilage et de préhension à structure en verre (7), sur une structure en verre (4, 6) se trouvant sur un chariot à structure en verre (3), dans lequel la structure en verre (4, 6) est fixée dans la position inclinée au moyen d'un dispositif pivotant (14),
après le remplissage, avec un nombre prédéfini pour la structure en verre (4, 6), du chariot à structure en verre (3), ce dernier est conduit au moyen de son entraînement (13) sur un dispositif rotatif (2), est fixé au moyen d'un dispositif de stabilisation (10) sur le dispositif rotatif (2), et est tourné de 180 degrés pour permettre le chargement d'un autre chariot à structure en verre (3),
après le chargement du dispositif rotatif (2) avec deux chariots à structure en verre (3), ces derniers sont transportés dans leur respectif véhicule de transport de verre correspondant mis à leur disposition (1), dans lequel le chariot à structure en verre (3) est transporté sur des rails depuis le convoyeur à rouleaux (8) jusqu'au véhicule de transport (1), et
une alimentation en énergie est effectuée par un rail sous plancher d'alimentation en énergie (24) qui est disposé dans la zone entre les rails (12).

6. Procédé selon la revendication 5, **caractérisé en ce que** :
en cas de bris de verre ou d'éventuels défauts, un déplacement est réalisé au moyen d'un rail supplémentaire sous forme de voie de triage (29) avec des chariots de triage (30, 28).

7. Procédé selon l'une des revendications 5 à 6, **caractérisé en ce que** :
un processus de chargement est détecté à l'endroit dédié au chargement (23) dans la zone du convoyeur à rouleaux de plaques en verre (8), au moyen d'un dispositif de détection (22) prévu des deux côtés du chariot à structure en verre (3).
